Europäisches Patentamt

(19) **European Patent Office**

Office européen des brevets

(11) Veröffentlichungsnummer: **0 033 758**
**B1**

(12) # EUROPÄISCHE PATENTSCHRIFT

(45) Veröffentlichungstag der Patentschrift:
**12.12.84**

(51) Int. Cl.³: **H 04 M 11/04**

(21) Anmeldenummer: **80105522.9**

(22) Anmeldetag: **15.09.80**

(54) **Notrufsystem.**

(30) Priorität: **04.02.80 DE 3003935**
**04.02.80 DE 3003944**

(43) Veröffentlichungstag der Anmeldung:
**19.08.81 Patentblatt 81/33**

(45) Bekanntmachung des Hinweises auf die Patenterteilung:
**12.12.84 Patentblatt 84/50**

(84) Benannte Vertragsstaaten:
**AT BE CH FR GB IT LI LU NL SE**

(56) Entgegenhaltungen:
**EP - A - 0 021 425**
**DE - A - 2 523 884**
**DE - A - 2 632 899**
**DE - A - 2 837 575**
**DE - A - 2 903 459**
**FR - A - 2 417 813**
**US - A - 3 441 681**

**ELECTRONIQUE & APPLICATIONS INDUSTRIELLES,**
**Nr. 254, 1. Juni 1978, Seiten 49-51 Paris, FR.**
**"L'organisation d'un système de transmission d'alarmes par téléphone: Détection d'intrus, incendie, surveillande de cuves..."**
**POLYTECHNISCH TIJDSCHRIFT**
**ELEKTROTECHNIEK/ELEKTRONICA, Band 30, Nr. 20,**

(73) Patentinhaber: **ANT Nachrichtentechnik GmbH,**
**Gerberstrasse 33, D-7150 Backnang (DE)**

(72) Erfinder: **Ostermann, Bernd, Dipl.-Ing., Ginsterhalde 8,**
**D-7153 Weissach im Tal (DE)**
Erfinder: **Stopp, Walter, Dr.Dipl.-Phys.,**
**Hölderlinstrasse 13, D-7151 Burgstetten (DE)**
Erfinder: **Rupp, Dieter, Dipl.-Ing., Bergäckerstrasse 13,**
**D-7151 Allmersbach im Tal (DE)**
Erfinder: **Lissner, Paul, Ing. (grad.), Ludwigsburger**
**Strasse 8, D-7150 Backnang (DE)**

(74) Vertreter: **Schickle, Gerhard, Dipl.-Ing., ANT**
**Nachrichtentechnik GmbH Patent- und Lizenzabteilung**
**Gerberstrasse 33, D-7150 Backnang (DE)**

(56) Entgegenhaltungen: (Fortsetzung)
**Oktober 1975, Seiten 687-693 Den Haag, NL. G.L.**
**HENDRIKS: "Beveiliging per computer"**

## Beschreibung

Die Erfindung betrifft ein Notrufsystem zur Übermittlung und Auswertung von Notrufen, z. B. älterer, gebrechlicher kranker und anderweitig hilfebedürftiger Personen.

In der französischen Zeitschrift »Electronique et Applications Industrielles«, Nr. 254, 1. Juni 1978, ist auf den Seiten 49 bis 51 ein Notrufsystem gemäß dem Oberbegriff des Patentanspruches 1 beschrieben. Dieses System ist für die Überwachung industrieller Anlagen gedacht, kann aber auch zur Übertragung von Notrufen von hilfebedürftigen Personen angewendet werden. In diesem Falle ist es nachteilig, daß nur digitale Daten übertragen und ausgedruckt werden. Sie ist die Notrufzentrale nur unvollkommen über die Wünsche der hilfebedürftigen Personen unterrichtet.

Der Erfindung liegt die Aufgabe zugrunde, ein Notrufsystem der obigen Art anzugeben, welches eine Sprechverbindung mit der hilfebedürftigen Person ermöglicht und welches eine Erhöhung der Erreichbarkeit der Notrufzentralen gestattet und insbesondere eine Blockade der Notrufzentrale bei nahezu gleichzeitigem Eintreffen von vielen Notrufen verhindert, wobei wichtige Notrufe, die eine schnelle Abhilfe erfordern, vorrangig bearbeitet werden können.

Diese Aufgabe wird durch ein Notrufsystem nach dem Patentanspruch 1 gelöst.

Die Unteransprüche geben vorteilhafte Ausgestaltungen der Erfindung an.

Durch die Erfindung wird die Erreichbarkeit von Notrufzentralen wesentlich erhöht, wobei bei nahezu gleichzeitigem Eintreffen von mehreren Notrufen wichtige Notrufe, die schnelle Hilfe erforderlich machen, vorrangig bearbeitet werden können. Durch das vorgeschlagene Notrufsystem wird außerdem verhindert, daß der hilfebedürftigen Person eine unnötige Wartezeit zugemutet wird, in der zu ihrer schon vorhandenen physischen und seelischen Belastungen noch die Ungewißheit hinzukommt, ob der Notruf richtig abgesetzt, d. h. bei der Notrufzentrale richtig angekommen ist und ob bzw. wann der Notruf in der Notrufzentrale bearbeitet werden wird.

In den Unterrichtsblättern der Deutschen Bundespost, Ausgabe B, Jg. 28/1975, Nr. 9, S. 267 sowie Nr. 10, S. 320 und Nr. 11, S. 343, ist ein Notrufsystem beschrieben, über das mit in allen Orten einheitlichen Rufnummern (112, 110) Notrufe von allen Fernsprechapparaten an Feuerwehr und Polizei übermittelt werden können und welches einen Dialog in Form einer Sprechverbindung mit der hilfebedürftigen Person ermöglicht. Für Notrufe von alten, gebrechlichen, kranken oder aus anderen gesundheitlichen Gründen hilfebedürftigen Personen ist dieses System wenig geeignet, weil die hilfebedürftigen Personen den in ihrer Wohnung befindlichen Fernsprechapparat bedienen müssen. Dazu sind die hilfebedürftigen Personen oft nicht in der Lage.

Für den Fall, daß eine hilfesuchende Person den Fernsprechapparat nicht mehr bedienen kann, weist dieses System Notrufmelder auf, die nach Betätigung eines Hebels automatisch eine Verbindung zur Notrufzentrale (Rufnummer 112 oder 110) wählen und anschließend eine Standortkennung übermitteln. So ist in der Notrufzentrale auch ohne Sprechverbindung noch der Ort des Notfalls bekannt. Diese Notrufmelder sind aber nur in wenigen Münzfernsprechzellen eingebaut und von alten, gebrechlichen oder kranken Personen im Notfall nicht erreichbar.

Das vorgenannte System hat noch die Nachteile, daß die Notrufzentralen (Polizei, Feuerwehr) bei alten gebrechlichen und kranken Personen nicht unmittelbar Hilfe leisten können, sondern den Ruf an andere Dienststellen (Krankenhaus, Fürsorgestation) weiterleiten müssen. Außerdem sind in den Fernsprechvermittlungsstellen zusätzliche Einrichtungen (spezielle Gruppenwahlstufen, Notrufübertragungen) notwenig, wodurch die freizügige Auswahl der anzuwählenden Rufnummern beträchtlich eingeschränkt wird. Die erwähnte Standortkennung besteht nur aus einer Nummer, die in der Notrufdienststelle angezeigt wird und aus der das Bedienpersonal anhand eines Verzeichnisses den Standort des Notrufmelders ermitteln muß.

Aus der deutschen Offenlegungsschrift 2 632 899 ist ein weiteres Notrufsystem bekannt, bei dem sich in der Notrufzentrale zumindest ein Bedienplatz befindet, der an die Anschlußleitungen anschaltbar ist und von dem mit der hilfebedürftigen Person gesprochen werden kann. Dieses System ist zur Lösung der der Erfindung zugrunde liegenden Aufgabe nicht geeignet, da ein eigenes Übertragungsnetz vorgesehen ist.

Die Erfindung wird im folgenden beschrieben.

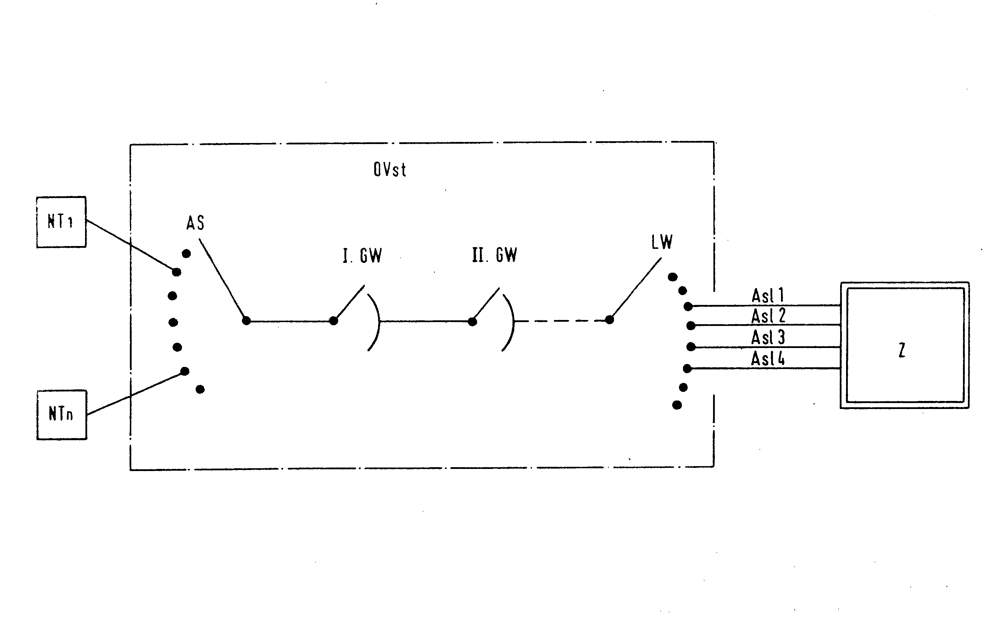

In der Figur, die ein Ausführungsbeispiel der Erfindung darstellt, ist auszugsweise eine Fernsprechvermittlungsstelle OVst mit den Wahlstufen Anrufsucher AS, 1. Gruppenwähler I. GW, 2. Gruppenwähler II. GW, Leitungswähler LW gezeichnet. In großen Fernsprechvermittlungsstellen können zwischen der 2. Gruppenwahlstufe und der Leitungswahlstufe weitere Wahlstufen eingefügt sein. Die Teilnehmergeräte NT 1 ... NT n sind wie gewöhnliche Fernsprechteilnehmer über Anschlußleitungen an die Fernsprechvermittlungsstelle OVst angeschlossen. Hier ist nur der Anschluß an die Anrufsucher AS gezeichnet, obwohl auch noch Verbindungen zum Leitungswähler LW bestehen.

Die Notrufzentrale Z ist über die Anschlußleitungen Asl 1 ... Asl 4 ebenfalls wie gewöhnliche Fernsprechteilnehmer, also teilnehmergleich, an die Fernsprechvermittlungsstelle OVst angeschlossen. Hier ist nur die Verbindung mit den Leitungswählerausgängen gezeichnet, obwohl auch noch Verbindungen zum Anrufsucher bestehen. In der Fernsprechvermittlungsstelle OVst werden die zur Notrufzentrale Z führenden Leitungen vorteilhafterweise als Sammelanschluß betrieben.

Es sind also in der Fernsprechvermittlungsstelle OVst keine speziellen zusätzlichen Einrichtungen für das Notrufsystem erforderlich.

Bei Auslösung eines Notrufes, z. B. durch Betätigung eines Sensors durch die hilfebedürftige Person, wählt das Teilnehmergerät NT 1 automatisch die Rufnummer der Anschlußleitung Asl 1. So wird eine Verbindung vom Teilnehmergerät NT 1 über die 1. und 2. — gegebenenfalls weiteren — Gruppenwählern, Leitungswähler LW, eine 1. freie Anschlußleitung Asl zur Notrufzentrale Z hergestellt.

Die Notrufzentrale Z schließt nach Erkennen des vom Leitungswähler LW ausgesandten Rufstromes die Schleife auf der betreffenden Anschlußleitung, und es erfolgt eine Kenntonprozedur zwischen Teilnehmergerät und Notrufzentrale, die der Prozedur gleicht, wie sie beim Aufbau einer Datenverbindung üblich ist. Ist die Datenverbindung zwischen Teilnehmergerät und Notrufzentrale betriebsbereit, so findet die Übertragung des Notruftelegramms, das die Kennung, eventuell Daten über die technische Ausstattung des Teilnehmergerätes und eventuell biomedizinische Daten sowie Telefonnummer der hilfebedürftigen Person enthält, zur Notrufzentrale statt, in der die Notrufdaten mit Eintreffdatum und -uhrzeit gespeichert werden. Der Empfang des Notruftelegramms in der Notrufzentrale wird durch Abgabe eines Quittungstelegramms an das Teilnehmergerät quittiert. In der Notrufzentrale wird das Notruftelegramm auf Drucker und/oder Sichtgerät ausgegeben. Durch eine freie Bedienperson wird daraufhin ein Bedienplatz an die betreffende Anschlußleitung angeschaltet und die Datenverbindung zwischen Teilnehmergerät und Notrufzentrale in eine Sprechverbindung zwischen hilfebedürftiger Person und der zentralen Bedienperson zur weiteren Bearbeitung des Notrufes umgeschaltet. Das ist dann sofort möglich, wenn das betreffende Teilnehmergerät mit einer Lautsprecheinrichtung ausgerüstet ist. Ist letzteres nicht der Fall, so kann eine Sprechverbindung nur über den Telefonapparat der hilfebedürftigen Person erfolgen.

Damit in dem Fall, daß Sprechverbindung und Notrufempfang über dieselben Anschlußleitungen erfolgen, auch noch Notrufe die Notrufzentrale Z erreichen, wenn alle Bedienplätze mit einer Anschlußleitung verbunden sind, um z. B. Notrufe abzufragen, ist die Zahl der Anschlußleitungen um mindestens eine größer als die Zahl der Bedienplätze zu wählen. Wird die letzte Anschlußleitung belegt, wird sie oder eine andere frühestens nach Übermitteln und Einspeichern der Kennung und eventueller weiterer Daten wieder freigeschaltet. Welche der Anschlußleitungen freigeschaltet wird, richtet sich nach den für jeden Notrufteilnehmer gespeicherten Prioritätsmerkmalen und/oder nach der Entscheidung des Bedienpersonals. Die Freischaltung kann auch schon erfolgen, wenn zwar noch Anschlußleitungen frei sind, jedoch das Bedienpersonal voll beschäftigt ist.

Für Teilnehmergeräte mit Lautsprecheinrichtung ergeben sich in den Ausgestaltungen der Erfindung weitere vorteilhafte Möglichkeiten. Hierbei ist eine derart, daß die Empfangsbestätigung für das Notruftelegramm durch eine entsprechende Ausgabe eines entsprechenden Textes mit Hilfe eines automatischen Gebers durch die Zentrale an das Teilnehmergerät erfolgt, wobei jedoch die Datenverbindung in eine Sprechverbindung umgewandelt werden muß. Dies kann beispielsweise durch eine einfache Steuertonprozedur erfolgen. In einer besonders günstigen Ausgestaltung der Erfindung ist der Textgeber ein Anrufbeantworter mit Tonspeicherung, so daß die hilfebedürftige Person nach entsprechender Aufforderung weitere Informationen auf Band sprechen kann, wonach die Anschlußleitung freigeschaltet wird. In einer anderen Ausgestaltung der Erfindung bleibt die Auslösung der Entscheidung des Bedienpersonals vorbehalten, das beispielsweise während der Bearbeitung eines anderen Notrufes sich die eingetroffenen und auf den Drucker oder Sichtgerät ausgegebenen Notruftexte ansieht, Abarbeitungsprioritäten festlegt und der hilfebedürftigen Person mit Hilfe entsprechender Tasteneingabe mitteilt, wann ein Rückruf seitens der Notrufzentrale erfolgen wird. Diese Zeitinformation ist mittels eines Quittungstelegramms oder mit Hilfe der Sprachausgabe an das Teilnehmergerät übertragbar.

Zur Freischaltung sendet die Notrufzentrale Z ein Freischaltesignal an das betreffende Teilnehmergerät, das daraufhin die Schleife auf seiner Anschlußleitung öffnet. Außerdem wird die erfolgte Freischaltung im Teilnehmergerät angezeigt zur Unterrichtung der hilfebedürftigen Person, daß der Notruf in der Notrufzentrale angekommen ist, eine Sprechverbindung aber nicht mehr besteht. Auch die Notrufzentrale Z öffnet die Schleife auf der freizuschaltenden Anschlußleitung. In Fernsprechvermittlungsstellen mit Rückwärtsauslösung werden schon durch dieses Öffnen der Schleife die Verbindung ausgelöst und die Anschlußleitung freigeschaltet. In Fernsprechvermittlungsstellen mit Vorwärtsauslösung dagegen führt erst die Schleifenöffnung durch das Teilnehmergerät zur Auslösung der Verbindung und Freischaltung der zur Notrufzentrale führenden Anschlußleitung.

Das Freischaltesignal kann zusammen mit dem Quittungstelegramm übermittelt werden.

Da die Kenntonprozedur und die Übertragung der Telegramme sehr kurz sind (Größenordnung Sekunde), ist die Belegungsdauer der Anschlußleitung der Notrufzentrale klein, wodurch die Erreichbarkeit für weitere Notrufe wesentlich erhöht wird.

Der auf der freigeschalteten Anschlußleitung eingegangene Notruf ist in der Notrufzentrale Z gespeichert, er wird an den Sichtgeräten weiterhin angezeigt und mittels Drucker dokumentiert. Das Bedienpersonal kann also später den betreffenden Notrufteilnehmer anrufen und mit ihm sprechen. Zu diesem Zweck sind die Bedienplätze so ausgestattet, daß mit ihnen auch abgehende Fernsprechverbindungen aufgebaut werden können, d. h. die Bedienplätze sind auch mit Nummernschalter oder Wähltastatur ausgerüstet.

Eine andere Möglichkeit ist, daß mit dem Freischaltesignal dem Teilnehmergerät befohlen wird, nach einer bestimmten Rückstellzeit, die sich aus der Warteschlange bzw. aus der Entscheidung des Bedienpersonals ergibt, die Notrufzentrale nochmals anzuwählen.

Es ist bekannt, das Teilnehmergerät über eine Umschalteinrichtung mit der Anschlußleitung eines vorhandenen Fernsprechanschlusses zu verbinden, wobei im Ruhezustand des Teilnehmergerätes die Anschlußleitung zum Fernsprechapparat durchgeschaltet ist. Zweckmäßig ist es, hierfür den Fernsprechanschluß der hilfebedürftigen Person zu benutzen. Vor Abgabe eines Notrufes wird die Anschlußleitung auf das Teilnehmergerät umgeschaltet und nach Freischaltung oder endgültiger Bearbeitung des Notrufes wieder zurückgeschaltet. Die Erfindung kann auch so ausgestaltet sein, daß nach Freischaltung die Anschlußleitung zum Teilnehmergerät umgeschaltet bleibt, so daß nach dem Rückruf durch die Notrufzentrale diese wieder mit dem Teilnehmergerät verbunden ist.

Die Erfindung eignet sich nicht nur für Notrufe hilfebedürftiger Personen, sondern sie kann auch vorteilhafterweise zum Schutz von Objekten eingesetzt werden.

**Patentansprüche**

1. Notrufsystem mit den Notruf automatisch aussendenden Teilnehmergeräten (NT1 ... Ntn), einer den Notruf empfangenden Notrufzentrale (Z) und Übertragung des Notrufes für ein Fernsprechwählvermittlungssystem, wobei die Notrufzentrale (Z) teilnehmergleich über eine oder mehrere Anschlußleitungen (Asl 1 ... Asl 4) an eine Fernsprechvermittlungsstelle (OVst) angeschlossen ist, wobei nach Auslösung des Notrufes das betreffende Teilnehmergerät (NT1) selbsttätig eine Verbindung zur Notrufzentrale wählt sowie nach dem Aufbau der Verbindung eine Kennung und Notrufdaten sendet, wobei Kennung und Notrufdaten in der Notrufzentrale (Z) gespeichert und für das Bedienpersonal erkennbar ausgegeben werden, wobei von der Notrufzentrale (Z) nach Empfang des Notrufes ein Quittungstelegramm ausgesandt wird und wobei das Teilnehmergerät (NT1) auf Grund eines von der Notrufzentrale (Z) gesendeten Signales die Schleife auf seiner Anschlußleitung öffnet, dadurch gekennzeichnet, daß sich in der Notrufzentrale (Z) ein oder mehrere Bedienplätze befinden, die durch Betätigung von Tasten oder Schaltern an die Anschlußleitungen (Asl 1 ... Asl 4) anschaltbar sind und von denen mit der hilfebedürftigen Person gesprochen werden kann, daß sowohl nach Belegung aller Anschlußleitungen (Asl 1 ... Asl 4) als auch im Besetztfall des Bedienpersonals mindestens eine dieser Anschlußleitungen (Asl 1 ... Asl 4) vor dem Anschalten eines Bedienplatzes freigeschaltet wird, daß zur Freischaltung einer Anschlußleitung die Notrufzentrale (Z) ein Freischaltesignal an das über diese Anschlußleitung mit der Notrufzentrale (Z) verbundene Teilnehmergerät sendet, daß das Eintreffen dieses Signals am Teilnehmergerät angezeigt wird und daß das Teilnehmergerät und die Notrufzentrale (Z) die Schleife auf der jeweiligen Anschlußleitung öffnen.

2. Notrufsystem nach Anspruch 1, dadurch gekennzeichnet, daß die Freischaltung nach Ausgabe eines Textes an die hilfebedürftige Person und/oder Herstellung der Sprechverbindung zwischen einem Anrufbeantworter in der Notrufzentrale (Z) und der hilfebedürftigen Person erfolgt.

3. Notrufsystem nach Anspruch 1 oder 2, dadurch gekennzeichnet, daß die Auswahl der freizuschaltenden Leitung nach gespeicherten Prioritätsmerkmalen und/oder in Abhängigkeit von der Entscheidung des Bedienpersonals erfolgt.

4. Notrufsystem nach Anspruch 1, 2 oder 3, dadurch gekennzeichnet, daß das Teilnehmergerät (NT1) über eine Umschalteinrichtung mit der Anschlußleitung für einen Fernsprechapparat verbunden ist, daß zur Abgabe des Notrufes die Anschlußleitung vom Fernsprechapparat auf das Teilnehmergerät umgeschaltet wird, und daß nach erfolgter Freischaltung die Anschlußleitung umgeschaltet bleibt.

**Claims**

1. Emergency call system with subscriber sets (NT1 ... NTn) automatically emitting the emergency call, an emergency call exchange (Z) receiving the emergency call and transmission of the emergency call by way of an automatic telephone exchange system, wherein the emergency call exchange (Z) like a subscriber is connected through one or more connecting lines (Asl 1 ... Asl 4) to a telephone exchange (OVst), wherein the concerned subscriber set (NT1) after triggering of the emergency call automatically selects a connection to the emergency call exchange as well as transmits an identification and emergency call data after the build-up of the connection, wherein identification and emergency call data are stored in the emergency call exchange (Z) and given out to be recognisable by the operating personnel, wherein a receipt telegram is emitted by the emergency call exchange (Z) after reception of the emergency call and wherein the subscriber set (NT1) opens the loop on its connecting line by reason of a signal sent from the emergency call exchange (Z), characterised thereby, that one or more operating positions are disposed in the emergency call exchange (Z), which are switchable through actuation of keys or switches to the connecting lines (Asl 1 ... Asl 4) and from which the person requiring help can be conversed with, that after occupation of all connecting lines (Asl 1 ... Asl 4) as well as also in the case of the operating personnel being engaged, at least one of these connecting lines (Asl 1 ... Asl 4) is switched free before the switching-on of an operating position, that the emergency call exchange (Z) for the switching-free of a connecting line sends a switching-free signal to the subscriber set connected through this connecting line with the emergency call exchange (Z), that the arrival of this signal is indicated at the subscriber set and that the subscriber set and the emergency call exchange (Z) open the loop on the respective connecting line.

2. Emergency call system according to claim 1, characterised thereby, that the switching-free takes place after the issue of a text to the person requiring help and/or production of the speech connection between a call answerer in the emergency call exchange (Z) and the person requiring help.

3. Emergency call system according to claim 1 or 2, characterised thereby, that the selection of the line to be switched free takes place in accordance with stored priority indications and/or in dependence on the decision of the operating personnel.

4. Emergency call system according to claim 1, 2 or 3, characterised thereby, that the subscriber set (NT1) is connected through a change-over switch equipment with the connecting line for a telephone set, that the connecting line is switched over from the telephone set to the subscriber set for the issue of the emergency call and that the connecting line remains switched over after switching-free has taken place.

## Revendications

1. Système de demande de secours comprenant des postes d'abonnés (NT 1 ... NTn) émettant la demande de secours automatiquement et un central recevant des demandes de secours ou central d'urgence (Z), avec transmission de la demande par un système téléphonique à sélection automatique, où le central d'urgence (Z) est raccordé par une ou plusieurs lignes de branchement (Asl 1 ... Asl 4) et à égalité d'abonnés à un central téléphonique (OVst), où, après déclenchement de la demande de secours, le poste d'abonné concerné (NT1) établit automatiquement une communication avec le central d'urgence et envoie, après établissement de la communication, une identification et des données de la demande de secours, cette identification et ces données étant mémorisées dans le central d'urgence (Z) et délivrées sous une forme reconnaissable par le personnel opérateur, le central d'urgence (Z), après réception de la demande de secours, émettant un télégramme d'accusé de réception, et où le poste d'abonné (NT1), à cause d'un signal envoyé par le central d'urgence (Z), ouvre la boucle sur la ligne de branchement, caractérisé en ce que le central d'urgence (Z) comporte un ou plusieurs postes d'opérateurs qui sont susceptibles d'être raccordés aux lignes de branchement (Asl 1 ... Asl 4) et à partir desquelles il est possible de converser avec la personne ayant besoin d'aide, en ce que, tant après occupation de toutes les lignes de branchement (Asl 1 ... Asl 4) qu'en cas d'occupation du personnel opérateur, l'une au moins de ces lignes de branchement (Asl 1 ... Asl 4) est déconnectée avant le raccordement d'un poste opérateur, en ce que le central d'urgence (Z), pour la déconnexion d'une ligne, envoie un signal de déconnexion au poste d'abonné relié au central d'urgence (Z) par cette ligne, que l'arrivée de ce signal au poste d'abonné est indiquée et que le poste d'abonné et le central d'urgence (Z) ouvrent alors le boucle sur la ligne de branchement concernée.

2. Système de demande de secours selon la revendication 1, caractérisé en ce que la déconnexion s'effectue après délivrance d'un texte à la personne ayant besoin d'aide et/ou après établissement de la communication vocale entre le répondeur dans le central d'urgence (Z) et la personne ayant besoin d'aide.

3. Système de demande de secours selon la revendication 1 ou 2, caractérisé en ce que le choix de la ligne à déconnecter s'effectue en fonction de caractéristiques de priorité mémorisées et/ou dépend de la décision du personnel opérateur.

4. Système de demande de secours selon la revendication 1, 2 ou 3, caractérisé en ce que le poste d'abonné (NT1) est relié à travers un dispositif de commutation à la ligne de branchement d'un poste téléphonique, en ce que, pour la délivrance de la demande de secours, la ligne de branchement est commutée du poste téléphonique au poste d'abonné du système de demande de secours et en ce que la ligne reste commutée ainsi après la déconnexion.